(19) Europäisches Patentamt
European Patent Office
Office européen des brevets

(11) Publication number: 0 264 072 B1

(12) **EUROPEAN PATENT SPECIFICATION**

(45) Date of publication of the patent specification: **12.09.90**

(51) Int. Cl.[5]: **C08L 71/02**, C08L 27/06

(21) Application number: **87114721.1**

(22) Date of filing: **08.10.87**

(54) **Curable composition.**

(30) Priority: **09.10.86 JP 240975/86**

(43) Date of publication of application: **20.04.88 Bulletin 88/16**

(45) Publication of the grant of the patent: **12.09.90 Bulletin 90/37**

(84) Designated Contracting States: **BE CH DE FR GB IT LI NL SE**

(56) References cited:
**EP-A- 0 012 559**
**EP-A- 0 035 049**
**EP-A- 0 043 965**
**EP-A- 0 108 946**
**DE-A- 2 551 275**
**US-A- 3 971 751**

**The file contains technical information submitted after the application was filed and not included in this specification**

(73) Proprietor: **KANEGAFUCHI KAGAKU KOGYO KABUSHIKI KAISHA, 2-4 Nakanoshima 3-chome, Kita-ku Osaka-shi Osaka-fu(JP)**

(72) Inventor: **Yukimoto, Sadao, 1-174-202, Hontamon 5-chome Tarumi-ku, Kobe-shi Hyogo-ken(JP)**
Inventor: **Kawakubo, Fumio, 1-68-404, Nishiochiai 6-chome Suma-ku, Kobe-shi Hyogo-ken(JP)**

(74) Representative: **Türk, Gille, Hrabal, Brucknerstrasse 20, D-4000 Düsseldorf 13(DE)**

**EP 0 264 072 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to a curable composition, and more particularly to a curable composition having improved storage stability.

A widely known composition, which upon exposure to atmospheric moisture is curable to form a rubbery substance, comprises an organic polymer having a cross-linkable group containing a silicon atom to which a hydrolyzable group is bonded (hereafter referred to as "hydrolyzable silicon group") as shown, for instance, in U.S. Patent No. 3,971,751. The curable composition is suitable for use in sealants and other similar materials.

It is known that the curable composition may be used in the form of a two-package system in which a main component and a curing agent are separately prepared and maintained, and are then admixed shortly before use. Also known is a one-package system in which a main component and a curing agent are previously admixed and the mixture is stored in an airtight container in an anhydrous state. Upon application, the mixture is cured by moisture in the air. The one-package system is considered to possess superior workability to that of the two-package system. However, in some instances, the one-package cures even when it is in an airtight container, with a consequent decrease in the workability of the composition. Thus, there is a need in the art for a curing composition possessing excellent storage stability.

Poor storage stability of the known curable composition results from moisture in an inorganic filler containing a large amount of water, such as calcium carbonate, talc or silicon dioxide. The fillers are admixed with the curable composition to impart rubber-like properties to the cured product of the composition or to lower the cost of the composition. During storage, the viscosity of the composition increases, or the composition solidifies as a result of cross-linking of the hydrolyzable silicon groups in the organic polymer through hydrolysis and a silanol condensation reaction.

Although several methods are known which improve storage stability of the composition in the one-package system, each suffers from certain disadvantages. Methanol may be added to the curable composition and an azeotropic dehydration performed to remove the moisture, but the operation is complicated. Alternatively, silanes or siloxanes having a hydrolyzable silicon group may be added to the curable composition, but the modulus of elasticity of the cured product is too great. Additionally, an alkyl ester of orthoformic acid (such as methyl orthoformate) may be added to the curable composition, but the curable composition still suffers from insufficient storage stability. Further, storage stability may be improved by drying the inorganic fillers in vacuo, but a special vacuum dryer is required and consequently high equipment costs are incurred.

The EP-A 0 108 946 discloses a curable composition containing (A) a polymer which has a crosslinkable silicon atom having a hydrolyzable group bonded to the silicon atom and (B) a vinyl containing polymer. The object of EP-A 0 108 946, being different to the one of the present invention, is to improve the physical properties such as weatherability and adhesive of the cured product by admixing the component (B) with the component (A).

An object of the present invention is to provide a one-package curable composition possessing excellent storage stability by adding a filler other than an inorganic filler to the composition.

This and other objects of the present invention will become apparent from the following description.

In accordance with the present invention, there is provided a curable composition comprising,

(A) 100 parts by weight of an organic polymer having in its repeating units at least one cross-linkable group containing a silicon atom to which a hydrolyzable group is bonded, the cross-linkable group being cross-linkable to produce an elastomer by the formation of a siloxane bond; and

(B) 10 to 500 parts by weight of particles of a vinyl chloride paste resin having a particle size of 0.01 to 10 mm, said vinyl chloride paste resin particles being present in said composition as a filler.

The curable composition of the present invention contains almost no moisture and consequently its viscosity does not increase, nor does its workability decrease, during storage.

The organic polymer having at least one hydrolyzable silicon group in its repeating unit of the present invention (hereinafter referred to as "organic polymer (A)") is an organic polymer having at least one, and preferably 1.1 ot 5.0 hydrolyzable silicon groups per one molecule of the organic polymer (A) either at the terminals of the polymer chain or as a pendant group, but preferably at the terminals of the polymer chain.

The term "hydrolyzable silicon group" as used herein means a cross-linkable group containing a silicon atom to which a hydrolyzable group is bonded which can cross-link to produce an elastomer by the formation of a siloxane bond (Si-O-Si). The siloxane bond is formed through hydrolysis of the hydrolyzable group and a silanol condensation reaction.

A representative example of the hydrolyzable silicon group is a group represented by the formula (1):

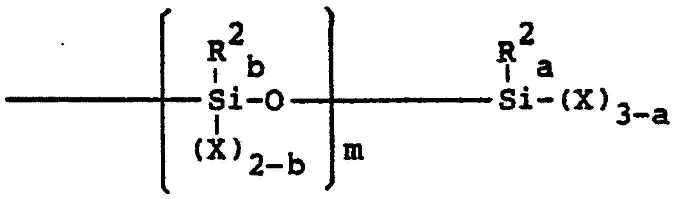 (1)

wherein $R^2$ is a hydrocarbon group having 1 to 20 carbon atoms or a triorganosiloxy group represented by the formula (2):

$(R^3)_3SiO$-(2)

in which each $R^3$ is a monovalent hydrocarbon group having 1 to 20 carbon atoms, and when more than one $R^2$ group is present, the $R^2$ groups are the same of different; X is a hydrolyzable group, and when more than one X group is present, the X groups are the same of different; a is 0, 1, 2 or 3, and b is 0, 1 or 2, provided that at least one X is present in the hydrolyzable silicon group; and m is 0 or an integer from 1 to 18.

As mentioned above, the $R^2$ groups are the same or different, and each is a monovalent hydrocarbon group having 1 to 20 carbon atoms or the triorganosiloxy group. Examples of the hydrocarbon group include, for instance, an alkyl group (such as a methyl group or an ethyl group), a cycloalkyl group (such as a cyclohexyl group), an aryl group (such as a phenyl group), and an aralkyl group (such as a benzyl group). The triorganosiloxy group has the formual (2):

$(R^3)_3SiO$-(2)

wherein each $R^3$ is a monovalent hydrocarbon group having 1 to 20 carbon atoms, such as a methyl group or a phenyl group. It is preferable that the $R^2$ or $R^3$ group is a methyl or a phenyl group from the standpoint of availability of starting materials.

Referring to formula (1), examples of the hydrolyzable X group are, for instance, a halogen atom, a hydrogen atom, an alkoxyl group, an acyloxyl group, a ketoxymate group, an amino group, an amido group, an aminoxy group, a mercapto group, an alkenyloxy group, and the like. Among them, the alkoxyl group is preferable because it is easily handled.

The number of the hydrolyzable silicon groups in the organic polymer (A) is at least one, and preferably from 1.1 to 5.0, per one molecule of the organic polymer (A). when the number of the hydrolyzable silicon groups is less than 1.0, the polymer is insufficiently cured. The number of the hydrolyable silicon groups does not have an upper limit, but it is preferable that the number is not more than 5 from the standpoint of the tensile properties of the cured product.

It is preferable that the organic polymer (A) has an average molecular weight within the range of 300 to 1,000,000.

Examples of the organic polymer (A) of the present invention include: a polymer whose main chain is substantially composed of an alkylene oxide polymer, an ether-ester block copolymer, a vinyl polymer or copolymer, a diene polymer.

If the organic polymer (A) of the present invention is an alkylene oxide polymer, it is preferable that the main chain is composed essentially of repeating units of the formula (3):

$-R^1-O-$(3)

wherein $R^1$ is a bivalent hydrocarbon group having 1 to 8 carbon atoms. It is most preferable that the main chain is composed essentially of repeating units represented by the formula (3) wherein $R^1$ is a hydrocarbon group having 1 to 4 carbon atoms.

The term "essentially" as used above means that the main chain may include monomer units and/or polymer units other than $-R^1-O-$. When an alkylene oxide polymer is the organic polymer (A), it constitutes more than 50 % by weight, preferably more than 70 % by weight, and more preferably more than 90 % by weight, of the abovementioned repeating units. Examples of the bivalent hydrocarbon group $R^1$ are, for instance,

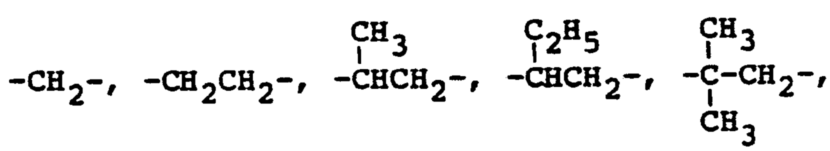

$-CH_2CH_2CH_2CH_2-$

The main chain of the alkylene oxide polymer comprises repeating units of one kind, or two or more kinds. Particularly, it is preferably that $R^1$ is

$$-\underset{}{\overset{CH_3}{\overset{|}{CH}}}-CH_2-.$$

It is preferable that the number average molecular weight of the alkylene oxide polymer is from 300 to 30,000, and more preferably from 3,000 to 15,000. Especially, an alkylene oxide polymer having hydrolyzable silicon groups at the terminals and having a number average molecular weight of 3,000 to 15,000 is preferred from the standpoint of easy handling and the tensile properties of the finished product.

As mentioned above, the organic polymer (A) of the present invention may be substantially composed of a vinyl polymer, a vinyl copolymer, or a diene polymer.

Examples of such polymers are, for instance, polybutadiene, styrene-butadiene copolymer, acrylonitrile-beutadiene copolymer, acrylic acid ester-butadiene copolymer, ethylene-butadiene copolymer, vinylpyridine-butadiene copolymer, ethylene-propylene copolymer, ethylene-vinylacetate copolymer, ethylene-acrylic acid ester copolymer, polyisoprene, styrene-isobutylene copolymer, isobutylene-isoprene copolymer, polychloroprene, styrene-chloroprene copolymer, acrylonitrile-chloroprene copolymer, polyisobutylene, polyacrylic acid ester, polymethacrylic acid ester.

Among these polymers, an organic polymer having not less than 50 % by weight of acrylic or methacrylic acid esters is preferred. Examples of the acrylic or methacrylic acid ester are acrylic or methacrylic acid esters of a linear, branched or alicyclic alcohol having 2 to 12 carbon atoms, such as n-butyl; acrylate or methacrylate, 2-ethylhexyl acrylate or methacrylate, ethyl acrylate, propyl acrylate, isobutyl acrylate or methacrylate, amyl acrylate or methacrylate, hexyl acrylate or methacrylate, cyclohexyl acrylate or methacrylate, n-octyl acrylate or methacrylate and n-decyl acrylate or methacrylate.

A vinyl polymer or copolymer having hydrolyzable silicon groups with an average molecular weight of 500 to 1,000,000 especially a molecular weight of 2,000 to 500,000 is preferable as the organic polymer (A). In the case of using the vinyl polymer or copolymer hving hydrolyzable silicon groups at the terminals, it is preferable that the vinyl polymer or copolymer has a molecular weight of 3,000 to 15,000.

The organic polymer (A) may be used alone or as an admixture thereof. For instance, it is possible to use the akylene oxide polymer with the vinyl polymer such as an acrylic alkyl ester polymer having the hydrolyzable silicon groups. Also, a polymer having the hydrolyzable silicon groups obtained by the polymerization of a vinyl monomer such as an alkyl ester of acrylic acid in the presence of the alkylene oxide polymer can be used.

The alkylene oxide polymer and the ether-ester block copolymer can be prepared by methods disclosed in, for instance, U.S. Patent No. 3,971,751, Japanese Examined Patent Publication No. 36319/1970, No. 12154/1971 and No. 32673/1974 and Japanese Unexamined Patent Publication No. 156599/1975, No. 73561/1976, No. 6096/1979, No. 13768/1980, No. 82134/1980, No. 131022/1980, No. 135135/1980 and No. 137129/1980.

The vinyl polymer and the vinyl copolymer can be prepared by methods disclosed in, for instance, Japanese Examined Patent Publication No. 28301/1976, and Japanese Unexamined Patent Publication No. 179210/1982.

The diene polymer can be prepared by methods disclosed in, for instance, Japanese Examined Patent Publication No. 17553/1970 and Japanese Unexamined Patent Publication No. 1389/1972.

According to the present invention, vinyl chloride paste resin (B) is combined with organic polymer (A)> The composition of the present invention has excellent storage stability due to the vinyl chloride paste resin (B). Furthermore, by using vinyl chloride paste resin (B), the curing time Z(i.e., the time necessary to obtain a tack free surface when curing) of the composition becomes shorter. Typical examples of the vinyl chloride paste resin (B) are, for instance, a vinyl chloride homopolymer, a copolymer of vinyl chloride and another component such as vinyl acetate, vinylidene chloride, an ester of acrylic acid or methacrylic acid, maleic acid or its ester, acrylonitrile, and the like. When a vinyl chloride copolymer is used, it can have not less than 50 % by weight vinyl chloride units.

The vinyl chloride paste resin (B) can be used alone or as an admixture thereof. Also, the vinyl chloride paste resin (B) having an average degree of polymerization of 200 to 10,000, preferably 300 to 4,000, can be used.

The vinyl chloride paste resin (B) is a homopolymer or a copolymer having from 0.02 to 5 μm which is usually called vinyl chloride paste resin. It is prepared by an emulsion polymerization. When using the vinyl chloride paste resin, the curable composition of the present invention yields a cured product having an excellent tensile property (elongation).

Also, when a plasticizer for vinyl chloride polymers is used with the vinyl chloride polymer (B), the cured product has an excellent tensile property in comparison with the case in which no plasticizer is used or with the case in which inorganic fillers is used instead of vinyl chloride polymer (B). Examples of the plasticizer are, for instance, phthalic acid esters such as dibutyl phthalate, diheptyl phthalate, di(2-ethyhexyl)phthalate, butyl benzyl phthalate and butyl phthalyl butyl glycolate; non-aromatic dibasic acid esters such as dioctyl adipate and dioctyl sebacale; polyalkylene glycol esters such as diethylene glycol

dibenzoate and triethylene glycol dibenzoate; phosphoric acid esters such as tricresyl phosphate and tributyl phosphate; chlorinated paraffins; epoxidated soy bean oil.

When a plasticizer is used with the vinyl chloride paste resin (B), an increase of viscosity or a solidification of the composition is often observed during storage. This fact can be attributed to the gelation of vinyl chloride polymer or absorption of the plasticizer by the vinyl chloride polymer. To prevent the increase in the viscosity or the solidification of the composition, it is desirable to partially gelatinize the vinyl chloride polymer by heating it with the plasticizer before or during preparation of the composition of the present invention. It is preferable to use vinyl chloride paste resin for partial gelation since vinyl chloride paste resin can be gelatinized at low temperature such as 50° to 120°C, and the composition of the present invention can be easily prepared from gelatinized vinyl chloride paste resin.

The vinyl chloride paste resin (B) is used in an amount of 10 to 500 parts by weight, preferably from 50 to 300 parts by weight, based on 100 parts by weight of the organic polymer (A). When the amount of the vinyl chloride paste resin (B) is less than 10 parts by weight, the effect that it imparts as a filler is insufficient. One the other hand, when the amount is more than 500 parts by weight, the tensile properties of the cured product become lower.

When a plasticizer for the vinyl chloride (B) is used in the composition of the present invention, it is preferable that the amount of the plasticizer for the vinyl chloride paste resin (B) is present in an amount from 10 to 500 parts by weight based on 100 parts by weight of the organic polymer (A) and is present in an amount from 10 to 200 parts by weight based on 100 parts by weight of the vinyl chloride paste resin (B).

The curable composition of the present invention may contain various fillers, plasticizers solvents, curing catalysts, and the like.

Examples of the fillers other than the vinyl chloride paste resin (B) are, for instance, calcium carbonate, Kaoline (clay), talc, magnesium carbonate, aluminum silicate, titanium oxide, zinc oxide, iron oxide, asbestos, glass powder, carbon black, and the like.

As the plasticizer, the above-mentioned plasticizer for vinyl chloride (B) and conventional plasticizers are used. For example, dioctyl phthalate, butylbenzyl phthalate, an epoxidized soybean oil, a chlorinated paraffin, an alkyl diphenyl, partially hydrogenated terphenyl, can be used.

Examples of the solvent are, for instance, an aromatic hydrocarbon solvent such as xylene or toluene, a lower alcohol such as methanol or ethanol.

Examples of the additive are, for instance, an adhesion accelerator, an antisagging agent, an antioxidant, coloring agent.

Examples of the adhesion accelerator are, for instance, epoxy resins, phenyl resis, various silane coupling agents having a functional group such as γ-propyltrimethoxysilane, γ-mercaptopropyltrimethoxysilane, γ-mercaptopropylmethyldimethoxysilane, γ-glycidoxypropyltrimethoxysilane or N-(β-aminoethyl)-aminopropylmethyldimethoxysilane, alkyl titanates, aromatic polyisocyanates.

Examples of the antisagging agent are, for instance, a hydrogenated castor oil, an organic bentonite, a metallic soap.

Examples of the curing catalyst are, for instance, a titanate such as tetrabutyl titanate or tetrapropyl titanate; and organotin compound such as dibutyl tin dilaurate, dibutyl tin maleate, dibutyl tin diacetate, tin octylate or tin naphthenate lead octylate; an amine compound such as butylamine, octylamine, dibutylamine, monoethanolamine, diethanolamine, triethanolamine, diethylenetriamine, triethylenetetramine, oleylamine, cyclohexylamine, benzylamine, diethylamino propylamine, xylylenediamine, triethylenediamine, guanidine, diphenylguanidine, 2,4,6-tris (dimethylaminomethyl)phenol, morpholine, N-methylmorpholine or 1,3-diazabicyclo-(5,4,6)undecene-7 (DBU), and its salt with a carboxylic acid. The curing catalysts may be employed alone or as an admixture thereof.

The curable composition of the present invention is suitable for use not only in a sealant but also in an adhesive, a molding material, a vibration proofing material, a foaming material, and the like.

The present invention is more specifically described and explained by means of the following Examples and Comparative Examples.

Examples 1 to 3

To a mixture of a propylene oxide polymer (A) having a number average molecular weight of 8,000 and having a group:

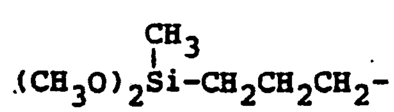

at 80 % of the whole polymer terminals and vinyl chloride paste resin (B) having a average degree of polymerization of 1,300 and a particle size of about 1 μm (commercially available under the trade name "PSM-30", made by Kanegafuchi Kagaku Kogyo Kabushiki Kaisha) were added calcium carbonate having a particle size of about 0.08 μm (commercially available under the trade name "CCR", made by Shiraishi Kogyo Kabushiki Kaisha), dioctyl phthalate as a plasticizer, titanium dioxide as a pigment, a hindered phenol antioxidant (commercially availabel under the trademark "Nocrac NS-6" made by Ouchi Shinko Kagaku Kabushiki Kaisha), and a hydrogenated caster oil as an antisagging agent in the predetermined amounts shown in Table 1. The mixture was kneaded for 3 hours at 120°C with dehydrating under a reduced pressure of 10 mmHg (1333 Pa). After cooling to room temperature, xylene was added thereto in the amount shown in Table 1 to lower the viscosity of the mixture. To the resulting mixture N-(β-aminoethyl)-γ-aminopropyltrimethoxysilane, as an adhesion accelerator (commercially available under the trade name "All20" made by Nippon Unicar Kabushiki Kaisha), and an organic tin compound, as a curing catalyst (commercially available under the trade name "No 918" made by Sankyo Yuki Gosei Kabushiki Kaisha) were added in the amounts shown in Table 1 and the mixture was kneaded to give a pasty composition.

The obtained pasty composition was charged into a sealed container and the container was allowed to stand at 50°C for one month. The viscosity of the composition stored at 50°C for one month and the viscosity of the composition before storage were measured at a temperature of 23°C by a Brook-field viscometer made by Tokyo Keiki Kabushiki Kaisha (roter; No. 7, screw speed: 2 rpm).

Also, a tack free time at 20± 3°C of the cured product of the composition was measured according to Japanese Industrial Standard (JIS) A 5758.

Further according to JIS A 5758, the type 2 H-shaped specimen was prepared from the obtained composition (adherent: anodic oxidized aluminum, primer: silicon compound commercially available under the trade name "APZ-730" made by Nippon Unica Kabushiki Kaisha). After aging the specimen under the predetermined test conditions, its tensile property (elongalion at bread) was measured.

The results are shown in Table 1.

Comparative Examples 1 to 3

The procedure of Example 1 to 3 was repeated except that the vinyl chloride paste resin (B) (PSM-30) was not used and a calcium carbonate was used in the amount shown in Table 1 as the filler.

The results are shown in Table 1.

**Table 1**

| Example No. | Ex. 1 | Ex. 2 | Ex. 3 | Com. Ex. 1 | Com. Ex. 2 | Com. Ex. 3 |
|---|---|---|---|---|---|---|
| Component (part) | | | | | | |
| Organic Polymer (A) | 100 | 100 | 100 | 100 | 100 | 100 |
| Filler: Vinyl chloride paste resin (B) (PSM-30) | 100 | 130 | 150 | — | — | — |
| Calcium carbonate | 30 | — | 150 | 130 | 130 | 300 |
| Pre-drying of the fillers (*1) | not done | not done | done | not done | done | done |
| Dioctyl phatalate | 60 | 60 | 100 | 60 | 60 | 100 |
| Titanium dioxide | 10 | 10 | 10 | 10 | 10 | 10 |
| Hydrogenated castor oil | 4 | 4 | 4 | 4 | 4 | 4 |
| Nocrac NS-6 | 0.5 | 0.5 | 0.5 | 0.5 | 0.5 | 0.5 |
| Xylene | 10 | 10 | 10 | 0 | 0 | 0 |
| A 1120 | 3.0 | 3.0 | 3.0 | 3.0 | 3.0 | 3.0 |
| No. 918 | 3.0 | 3.0 | 3.0 | 3.0 | 3.0 | 3.0 |

- continued -

Table 1

- continued -

| | Example No. | | Ex. 1 | Ex. 2 | Ex. 3 | Com. Ex. 1 | Com. Ex. 2 | Com. Ex. 3 |
|---|---|---|---|---|---|---|---|---|
| Property | Viscosity (poise) ($10^{-1}$ Pas) | before storage | 9,300 | 7,800 | 10,200 | 11,800 | 11,800 | 13,800 |
| | | after one-month | 9,400 | 7,880 | 10,310 | gellation | 14,700 | 24,300 |
| | Tack free time (Hours) | before storage | 2.2 | 2.0 | 2.0 | 6.0 | 6.0 | 5.0 |
| | Elongation at break (%) | | 490 | 480 | 430 | 410 | 420 | 310 |

(Note) *1: The fillers were previously dried at a temperature of 120°C for 5 hours under a reduced pressure of 10 mmHg.

From the results in Table 1, it will be understood that when vinyl chloride paste resin (B) is employed as the filler, the viscosity of the curable composition is hardly increased after one-month storage at 50°C even if the fillers were not previuosly dried (Examples 1 and 2). Also, it will be understood that when the vinyl chloride paste resin (B) is used, even if the curable composition contains a large amount of other fillers, the viscosity after one-month storage at 50°C of the composition is hardly increased (Example 3).

On the other hand, it will be understood that when only calcium carbonate is employed as the filler and the filler is not previously dried, the gelation of the composition is caused after one-month storage at 50°C and the composition cannot be used as a sealant (Comparative Example 1). Also, it will be understood that even if the filler is previously dried, when the composition contains a large amount of the filler, the viscosity is increased after one-month storage at 50°C and the workability of the composition is lowered (Comparative Example 3).

Further it will be understood that when only calcium carbonate is employed as the filler, the tack free time of the cured composition becomes longer.

## Claims

1. A curable composition comprising,
(A) 100 parts by weight of an organic polymer having in its molecule at least one cross-linkable group containing a silicon atom to which a hydrolyzable group is bonded, said cross-linkable group being cross-linkable to produce an elastomer by the formation of a siloxane bond, and
B) 10 to 500 parts by weight of particles of vinyl chloride paste resin having a particle size of 0.01 to 10 µm, said vinyl chloride paste resin particles being present in said composition as a filler.

2. The composition of Claim 1, wherein said organic polymer (A) has a molecular weight in the range of 300 to 1,000,000.

3. The composition of Claim 1, wherein said organic polymer (A) is an alkylene oxide polymer having a main chain which consists essentially of repeating units represented by the formula (3):
$-R^1-O-$
wherein $R^1$ is a bivalent hydrocarbon group having 1 to 8 carbon atoms.

4. The composition of Claim 1, wherein said cross-linkable group is bonded at its terminal to said organic polymer (A).

5. The composition of Claim 1, wherein said vinyl chloride paste resin has an average degree of polymerization of 200 to 10,000.

6. The composition of Claim 1, which further comprises a plasticizer for the vinyl chloride paste resin as an additive.

## Patentansprüche

1. Härtbare Zusammensetzung umfassend,
(A) 100 Gewichtsteile eines organischen Polymers mit mindestens einer vernetzbaren Gruppe im Molekül, enthaltend ein Siliciumatom an das eine hydrolisierbare Gruppe gebunden ist, wobei die vernetzbare Gruppe vernetzbar ist, um unter Bildung einer Siloxanbindung ein Elastomer zu ergeben, und
(B) 10 bis 500 Gewichtsteile von Vinylchloridpastenharzteilchen mit einer Teilchengröße von 0.01 bis 10 µm, wobei die Vinylchloridpastenharzteilchen in der Zusammensetzung als Füllstoff vorliegen.

2. Zusammensetzung nach Anspruch 1, worin das organische Polymer (A) ein Molekulargewicht im Bereich von 300 bis 1 000 000 besitzt.

3. Zusammensetzung nach Anspruch 1, worin das organische Polymer (A) ein Alkylenoxidpolymer ist mit einer Hauptgruppe, die im wesentlichen aus sich wiederholenden Einheiten, dargestellt durch die Formel (3), besteht:
$-R^1-O-$
worin $R^1$ eine zweiwertige Kohlenwasserstoffgruppe mit 1 bis 8 Kohlenstoffatomen ist.

4. Zusammensetzung nach Anspruch 1, worin die genannte vernetzbare Gruppe endständig an das organische Polymer (A) gebunden ist.

5. Zusammensetzung nach Anspruch 1, worin das genannte Vinylchloridpastenharz einen durchschnittlichen Polymerisationsgrad von 200 bis 10000 besitzt.

6. Zusammensetzung nach Anspruch 1, die ferner einen Weichmacher für das Vinylchloridpastenharz als Additiv enthält.

## Revendications

1. Composition durcissable comprenant
(A) 100 parties en poids d'un polymère organique portant dans sa molécule au moins un groupe réticulable contenant un atome de silicium auquel est lié un groupe hydrolysable, ledit groupe réticulable étant réticulable pour produire un élastomère par la formation d'une liaison siloxane, et
(B) de 10 à 500 parties en poids de particules de chlorure de vinyle sous forme d'une résine pâteuse

d'une granulométrie de 0,01 à 10 µm, lesdites particules de résine pâteuse de chlorure de vinyle étant présentes dans ladite composition en qualité de charge.

2. Composition selon la revendication 1, dans laquelle ledit polymère organique (A) présente une masse moléculaire comprise entre 300 et 1 000 000.

3. Composition selon la revendication 1, dans laquelle ledit polymère organique (A) est un polymère d'oxyde d'alkylène comportant une chaîne principale qui consiste essentiellement en motifs récurrents de formule (3):

$-R^1-O-$ (3)

dans laquelle $R^1$ est un groupe hydrocarboné bivalent contenant de 1 à 8 atomes de carbone.

4. Composition selon la revendication 1, dans laquelle ledit groupe réticulable est lié par sa partie terminale audit polymère organique (A).

5. Composition selon la revendication 1, dans laquelle ladite résine pâteuse de chlorure de vinyle présente un degré moyen de polymérisation de 200 à 10 000.

6. Composition selon la revendication 1, qui contient en outre un plastifiant pour la résine pâteuse de chlorure de vinyle en qualité d'additif.